Europäisches Patentamt

European Patent Office

Office européen des brevets

(19)

(11) Veröffentlichungsnummer: **0 134 419**
**B1**

(12) **EUROPÄISCHE PATENTSCHRIFT**

(45) Veröffentlichungstag der Patentschrift:
29.10.86

(51) Int. Cl.⁴: **G 11 B 17/04**

(21) Anmeldenummer: **84106305.0**

(22) Anmeldetag: **01.06.84**

(54) Staubschutzvorrichtung.

(30) Priorität: **08.07.83 DE 8319791 U**

(43) Veröffentlichungstag der Anmeldung:
**20.03.85 Patentblatt 85/12**

(45) Bekanntmachung des Hinweises auf die Patenterteilung:
**29.10.86 Patentblatt 86/44**

(84) Benannte Vertragsstaaten:
**DE FR GB IT NL SE**

(56) Entgegenhaltungen:
**DE - A - 2 746 718**
**DE - A - 3 116 694**
**FR - A - 2 374 722**
**GB - A - 2 083 679**

(73) Patentinhaber: **Nixdorf Computer Aktiengesellschaft,
Fürstenallee 7, D-4790 Paderborn (DE)**

(72) Erfinder: **Bräutigam, Alfons, Hölternstrasse 13,
D-4790 Paderborn (DE)**

(74) Vertreter: **Patentanwälte Schaumburg & Thoenes,
Mauerkircherstrasse 31 Postfach 86 07 48,
D-8000 München 80 (DE)**

ACTORUM AG

# Beschreibung

Die Erfindung betrifft eine Staubschutzdichtung für den Einführschlitz im Gehäuse eines Laufwerkes für Magnetspeicherplatten, insbesondere flexible Magnetspeicherplatten (im folgenden kurz «Magnetplatten» genannt) gemäss dem Oberbegriff des Anspruchs 1.

Derartige Laufwerke werden insbesondere in Datenverarbeitungsanlagen in Verbindung mit sogenannten Disketten verwendet, die mitsamt ihrer Hülle in den Einführungsschlitz eingeschoben werden. Das Laufwerk, die Magnetköpfe und die Magnetplatten unterliegen einem erhöhten Verschleiss, wenn Staub ungehindert durch den Einführungsschlitz in das Laufwerk eindringen kann. So kann es beispielsweise vorkommen, dass ein Laufwerk ohne eingeschobene Magnetplatte über längere Zeit, beispielsweise Stunden oder Tage unbeabsichtigt in Betrieb ist. Der dabei durch den Einführungsschlitz in das Gerät geförderte Staub kann die Funktion des Laufwerkes erheblich beeinträchtigen.

Bei einer aus der GB-A-2 083 679 bekannten Staubschutzvorrichtung der eingangs genannten Art sind die Dichtlippen von zwei wulstförmigen Streifen gebildet, die einen das Einschreiben auf die Magnetspeicherplatte ermöglichenden Abstand voneinander aufweisen. Durch den dadurch gebildeten Spalt kann Staub in des Gehäuseinnere eindringen.

Zur Staubabdichtung ist es ausserdem bereits bekannt, vor dem Einführungsschlitz eine schwenkbare Klappe ähnlich wie bei einem Briefkastenschlitz vorzusehen. Diese Klappe hat den Nachteil, dass sie leicht klemmt und nicht wieder in ihre Schliessstellung zurückklappt. Es wurde auch bereits vorgeschlagen, eine derartige Klappe mit einem Betätigungshebel zu versehen, so dass sie zwangsweise aus ihrer Offenstellung in ihre Schliessstellung überführt werden kann. Es hat sich jedoch gezeigt, dass es im Betrieb häufig vergessen wird, wie Klappe wieder zu schliessen.

Der Erfindung liegt die Aufgabe zugrunde, eine Staubschutzvorrichtung der eingangs genannten Art anzugeben, die einfach und preiswert herzustellen ist, sowohl bei eingeschobener Magnetplatte als auch bei herausgezogener Magnetplatte den Einführungsschlitz ohne das Eingreifen einer Bedienungsperson im wesentlichen staubsicher abdichtet und die darüber hinaus funktionssicher ist.

Diese Aufgabe wird erfindungsgemäss durch die im Kennzeichen des Anspruchs 1 aufgeführten Merkmale gelöst.

Vorzugsweise umfassen die Dichtungslippen jeweils einen von ihrem befestigten Längsrand zur Schlitzmittelebene hin geneigten Hauptabschnitt und einen sich an diesen anschliessenden, von der Schlitzmittelebene weg gekrümmten freien Randabschnitt. Solange keine Magnetplatte eingeschoben ist, liegen die beiden Dichtlippen unmittelbar aneinander an und verschliessen den Einführschlitz gegen eindringenden Staub. Wird eine Magnetplatte eingeschoben, so werden die beiden Dichtungslippen auseinandergedrängt und gleiten auf der Oberfläche der Magnetplatte oder ihrer Hülle. Somit kann auch bei eingeschobener Magnetplatte kein Staub in das Laufwerk eindringen. Der Neigungswinkel des Hauptabschnittes der jeweiligen Dichtungslippe zur Schlitzmittelebene sollte ca. 15° bis 35°, vorzugsweise ca. 25° betragen. Ist dieser Winkel zu gross, besteht die Gefahr, dass die Dichtungslippen beim Herausziehen der Magnetplatte nach aussen umgestülpt werden. Bei zu geringem Neigungswinkel müssten die Dichtungslippen relativ breit ausgeführt werden, damit sie auch bei nichteingeschobener Magnetplatte dichtend aneinanderliegen. Bei eingeschobener Magnetplatte würden dabei aber wiederum die Dichtlippen relativ grossflächig an der Magnetplatte anliegen, so dass beim Herausziehen der Magnetplatte aus dem Einführungsschlitz die Reibung zwischen den Dichtlippen und der Magnetplatte vergrössert wird.

Eine wichtige Eigenschaft der erfindungsgemässen Staubschutzvorrichtung besteht darin, dass die Dichtungslippen eine relativ hohe und auch gleichbleibende Elastizität besitzen, dass sie aber gleichzeitig keine grossen Andruckkräfte und Reibungskräfte auf die Hülle der Magnetplatte oder auf die Magnetplatte selber ausüben dürfen. Zum einen sind die Dichtungslippen hierzu aus einem reibungsarmen Kunststoff wie beispielsweise einem Polyimid mit glatter Oberfläche hergestellt, zum anderen besitzen die Dichtungslippen jeweils eine zur Streifenbreite geringe Materialstärke, so dass sie sehr leicht ohne grosse Rückstellkräfte auslenkbar sind. Es hat sich gezeigt, dass der nächstliegende Werkstoff für derartige Dichtungslippen, nämlich Gummi oder Weich-PVC für den vorgesehenen Einsatzzweck ungeeignet ist, da die Reibungskräfte zwischen diesen Materialien und der Magnetplatte oder ihrer Hülle zu gross sind.

Die folgende Beschreibung erläutert in Verbindung mit den beigefügten Zeichnungen ein Ausführungsbeispiel der Erfindung. Es zeigen:

Fig. 1 eine perspektivische Ansicht der Frontblende eines Magnetplattenlaufwerkes mit einem Einführungsschlitz und einer neuerungsgemässen Staubschutzvorrichtung,

Fig. 2 einen Schnitt durch die in Fig. 1 dargestellte Frontblende senkrecht zur Längsrichtung des Einführungsschlitzes ohne eingeschobene Magnetplatte und

Fig. 3 einen der Fig. 2 entsprechenden Schnitt mit einer eingeschobenen Magnetplatte.

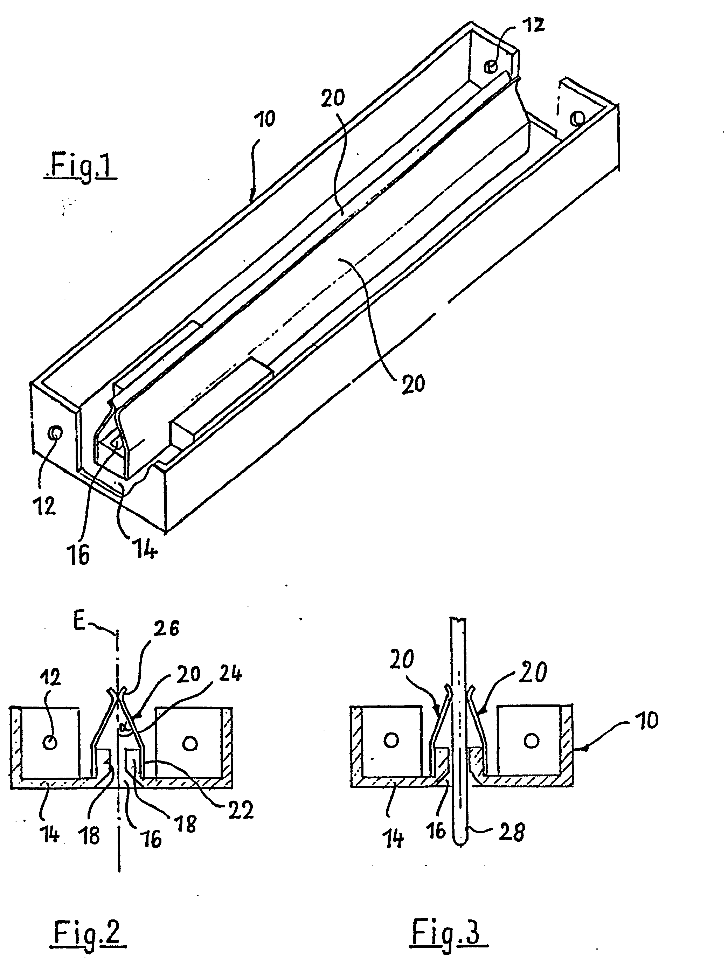

In Fig. 1 erkennt man eine Frontblende 10 eines im übrigen nicht dargestellten sogenannten Diskettenlaufwerkes, wobei der Blick auf die Innenseite, das heisst die dem Gerät zugewandte Seite der Frontblende 10 fällt. Diese Frontblende 10 besitzt eine kastenförmige Gestalt und kann mit Hilfe nichtdargestellter Schrauben, welche Löcher 12 in den Seitenwänden der Frontblende 10 durchsetzen, an dem Gehäuse des Diskettenlaufwerkes angeschraubt werden. In der Vorderwand 14 der Frontblende 10 ist ein sich nahezu über die gesamte Länge der Frontblende 10 erstreckender Einführschlitz 16 ausgebildet, der entlang seiner Ränder auf der Innenseite der Frontwand 14 von Stegen 18 eingefasst ist.

An der Aussenseite der entlang der Länngsränder des Einführschlitzes 16 verlaufenden Stege 18 ist jeweils eine Dichtungslippe 20 befestigt, beispielsweise mit Hilfe eines doppelseitigen Klebebandes angeklebt. Die Dichtungslippe 20 umfasst jeweils einen ersten Randabschnitt 22, der an dem jeweiligen Steg 18 befestigt ist, einen sich hieran anschliessenden Hauptabschnitt 24, der unter einem Winkel ∝ gegenüber der Schlitzmittelebene E geneigt ist, und einen sich an diesen anschliessenden freien Randbereich 26, der von der Schlitzmittelebene E weggekrümmt ist.

Die Dichtungslippen 20 bestehen aus einem flexiblen Kunststoff mit geringem Reibungskoeffizienten, der auch relativ hohe Temperaturen, das heisst mindestens etwa 150° verträgt, ohne seine Form oder seinen Reibungskoeffizienten wesentlich zu verändern. Der Neigungswinkel ∝ ist relativ zur Breite des Hauptabschnittes 24 der jeweiligen Dichtungslippe so gewählt, dass die beiden Dichtungslippen 20 gemäss Fig. 2 im Bereich ihrer Randabschnitte 26 unter leichtem elastischen Druck aneinander anliegen, wenn keine Magnetplatte in den Einführungsschlitz 16 eingeführt ist.

Wird dagegen die Magnetplatte, im vorliegenden Beispiel eine biegsame Magnetplatte 28 zusammen mit ihrer Hülle durch den Einführschlitz 16 in das Laufwerk eingeschoben, so werden die beiden Dichtungslippen 20 auseinandergedrängt und gleiten nun mit ihren Randbereichen 26 auf der Oberfläche der Hülle der Magnetplatte 28. Da die Materialstärke der Dichtungslippen verglichen mit ihrer Breite relativ gering ist, sind die Rückstellkräfte und damit die Andruckkräfte, mit denen die Dichtungslippen an der Hülle der Magnetplatte 28 anliegen, relativ gering. Sie reichen jedoch aus, einen staubdichten Abschluss zwischen den Dichtungslippen 20 und der Hülle der Magnetplatte 28 zu erzielen. Wird die Hülle mit der Magnetplatte 28 wieder aus dem Gerät herausgezogen, schnappen die beiden Dichtungslippen 20 wieder zusammen in die in der Fig. 2 dargestellte Stellung und verschliessen den Einführschlitz.

Durch die neuerungsgemässe Staubschutzvorrichtung erhält man eine höhere Standzeit für das Laufwerk, die Magnetköpfe und die Magnetplatte. Gegenüber mechanischen oder elektromechanisch betätigten Staubschutzvorrichtungen ergibt sich aufgrund der Einfachheit der neuerungsgemässen Staubschutzvorrichtung eine erhebliche Kosteneinsparung. Die Montage ist einfach und kann somit ohne grossen Zeitaufwand und zu geringen Fertigungskosten vorgenommen werden. Die Staubschutzvorrichtung ist funktionssicher, da keine Teile klemmen oder haken können.

## Patentansprüche

1. Staubschutzvorrichtung für den Einführschlitz im Gehäuse eines Laufwerkes für Magnetspeicherplatten, insbesondere flexible Magnetspeicherplatten, bei der beiderseits des Einführschlitzes (16) und parallel zu diesem jeweils eine streifenförmige elastische Dichtungslippe (20) angeordnet ist, dadurch gekennzeichnet, dass die Dichtungslippen (20) jeweils entlang ihres einen Längsrandes (22) an dem Gehäuse befestigt sind und mit ihrem anderen Längsrand (26) derart zum Gehäuseinnenrand hin gerichtet sind, dass sie im Bereich ihrer zum Gehäuseinnenraum weisenden freien Längsränder (26) bei nicht eingeschobener Magnetspeicherplatte aneinander anliegen und dass das Material der Dichtungslippen (20) jeweils eine relativ zur Streifenbreite geringe Stärke und eine glatte Oberfläche besitzt.

2. Staubschutzvorrichtung nach Anspruch 1, dadurch gekennzeichnet, dass die Dichtungslippen (20) jeweils einen von ihrem befestigten Längsrand (22) zur Schlitzmittelebene (E) hin geneigten Hauptabschnitt (24) und einen sich an diesen anschliessenden, von der Schlitzmittelebene (E) weg gekrümmten freien Randabschnitt (26) aufweisen.

3. Staubschutzvorrichtung nach Anspruch 2, dadurch gekennzeichnet, dass der Neigungswinkel (∝) des Hauptabschnittes (24) zur Schlitzmittelebene (E) ca. 15° bis 35°c, vorzugsweise ca. 25° beträgt.

4. Staubschutzvorrichtung nach einem der Ansprüche 1 bis 3, dadurch gekennzeichnet, dass die Dichtungslippen (20) jeweils an einem an der Gehäuseinnenseite entlang des Einführschlitzes (16) ausgebildeten Steg (18) befestigt sind.

5. Staubschutzvorrichtung nach einem der Ansprüche 1 bis 4, dadurch gekennzeichnet, dass die Dichtungslippen (20) aus Polyimid hergestellt sind.

## Claims

1. A dust protecting device for an insertion slot in the housing of a drive for magnetic memory disks, in particular flexible magnetic memory disks, wherein a lamellar elastic sealing lip (20) is respectively arranged on either side of said insertion slot (16) parallel therewith, characterized in that said sealing lips (20) are respectively attached to the housing along their one longitudinal edge (22), and that said sealing lips (20) with their other longitudinal edge (26) are oriented towards the inner edge of the housing in such a way that they rest on one another in the region of their free longitudinal edges (26) oriented towards the inner space of the housing when the magnetic memory disk is not inserted, and that the material of said sealing lips (20) respectively has a small thickness relative to the width of the strips and a smooth surface.

2. A dust protecting device as claimed in Claim 1, characterized in that said sealing lips (20) respectively have a main section (24) inclined from the fastened longitudinal edge (22) of said sealing lips towards the middle plane (E) of said slot and a free end section (26) joined with said main section and bent away from said slot middle plane (E).

3. A dust protecting device as claimed in Claim 2, characterized in that the angle of inclination (∝) of said main section (24) towards said slot middle plane (E) is approximately from 15° to 35°, preferably approximately 25°.

4. A dust protecting device as claimed in any one of Claims 1 to 3, characterized in that said sealing lips (20) each are attached to a leg (18) extending along said insertion slot (16) at the inner side of the housing.

5. A dust protecting device as claimed in any one of Claims 1 to 4, characterized in that said sealing lips (20) are made of polyimide.

## Revendications

1. Dispositif antipoussière pour la fente d'introduction prévue dans le carter d'un mécanisme d'entraînement pour des disques de mémoires magnétiques, notamment des disques souples, dans lequel on dispose de chaque côté de la fente d'introduction (16) et parallèlement à celle-ci une lèvre d'étanchéité élastique (20) en forme de bande, caractérisé en ce que des lèvres d'étanchéité (20) sont fixées sur le carter recpectivement par un de leurs bords longitudinaux (22) et que leurs autres bords longitudinaux (26) sont orientés par rapport à la paroi intérieure du carter de telle sorte que, dans la zone où leurs bords longitudinaux libres (26) sont orientés vers l'intérieur du carter, les lèvres d'étanchéité (20) sont appliquées l'une contre l'autre lorsque le disque de mémoire magnétique n'est pas introduit, et en ce que le matériau des lévres d'étanchéité (20) a une faible épaisseur par rappaort à la largeur de la bande et une surface lisse.

2. Dispositif antipoussière selon la revendication 1, caractérisé en ce que les lèvres d'étanchéité (20) ont une portion principale (24) inclinée de son bord longitudinal (22) fixé vers le plan médian de la fente (E), et une portion de bord (26) libre se raccordant à la précédente et incurvée en s'écartant du plan médian de la fente (E).

3. Dispositif antipoussière selon la revendication 2, caractérisé en ce que l'angle d'inclinaison ($\propto$) de la portion principale (24) par rapport au plan médian de la fente (E) est compris entre 15° et 35° environ, et il est de préférence 25° environ.

4. Dispositif antipoussière selon l'une des revendications 1 à 3, caractérisé en ce que les lèvres d'étanchéité (20) sont fixées respectivement sur une nervure (18) formée sur le côté intérieur du carter le long de la fente d'introduction (16).

5. Dispositif antipoussière selon l'une des revendications 1 à 4, caractérisé en ce que les lèvres d'étanchéite (20) sont fabriquées en polyimide.

Fig.1

E

Fig.2

Fig.3